(19) Europäisches Patentamt

European Patent Office

Office européen des brevets

(11) Publication number: **0 335 097 B1**

(12) **EUROPEAN PATENT SPECIFICATION**

(45) Date of publication of patent specification: **20.10.93**

(51) Int. Cl.5: **B29C 43/02**, B29C 31/04, B29C 33/68

(21) Application number: **89102917.5**

(22) Date of filing: **20.02.89**

(54) **Compression molding using insulating films.**

(30) Priority: **30.03.88 US 176116**

(43) Date of publication of application:
**04.10.89 Bulletin 89/40**

(45) Publication of the grant of the patent:
**20.10.93 Bulletin 93/42**

(84) Designated Contracting States:
**DE FR GB IT NL**

(56) References cited:
**GB-A- 18 174**
**GB-A- 745 628**
**US-A- 3 031 959**
**US-A- 3 662 050**

**PATENT ABSTRACTS OF JAPAN, vol. 10, no.
130 (M-478)[2187], 14th May 1986; & JP-A-60
257 212 (ASAHI KASEI) 19-12-1985**

**IDEM**

**PATENT ABSTRACTS OF JAPAN, vol. 12, no.
400 (M-756)[3247], 24th October 1988; & JP-
A-63 144 020 (TOYO KASEI) 16-06-1988**

(73) Proprietor: **GENERAL ELECTRIC COMPANY
1 River Road
Schenectady New York 12305(US)**

(72) Inventor: **Kim, Bang Mo
1505 Wheatly Court
Schenectady New York 12309(US)**
Inventor: **Woodmansee, Donald Ernest
1407 Dean Street
Schenectady New York 12309(US)**

(74) Representative: **Pratt, Richard Wilson et al
London Patent Operation
G.E. Technical Services Co. Inc.
Essex House
12/13 Essex Street
London WC2R 3AA (GB)**

# EP 0 335 097 B1

**Description**

Cross Reference to Related Applications

This application is related to copending European applications 89102918.3 (EP-A-0335098) and 89102930.8 (EP-A-0335100) entitled "Compression Molding of Composite Parts on Hot Mold Surfaces With a Short Cycle Time", and "Multilayer Composite Mold Structure For Molding on Hot Surfaces", respectively, both assigned to same assignee as the present invention.

Background of the Invention

The present invention is related to a method of compression molding plastics.

Present practice in compression molding neat plastics and plastic composites is to feed preheated sheets of the plastic material into a press, close the press and simultaneously deform the hot plastic sheet into the desired component shape while cooling it. Since the plastic in contact with the mold cools quickly, the forces needed to deform the plastic can be enormous, particularly for large area components.

Another problem with flow forming plastics and particularly plastic components in compression molding is achieving smooth surfaces. As soon as the plastic sheet blank enters the mold it begins cooling, even before the press closes and therefore before the plastic has been molded. This rapid cooling not only increases molding pressures required to flow form the plastic, but also gives rise to surface roughness. When composite materials are used, the rapid cooling results in exposed fibers, porous areas, and visible boundaries of the sheet blank between resin frozen at the surface and the newly formed resin areas produced when molten resin in the composite sheet interior moves to the surface. Changing the mold temperature greatly increases cycle time since the mold requires large masses of metal to contain the stresses of the molding operation and these large masses take time to heat and cool.

It is an object of the present invention to provide a method of compression molding thermoplastic sheets which reduces the required molding pressure and therefore reduces press size, which is particularly significant in large part fabrication.

It is a further embodiment of the present invention to provide a method of compression molding which results in finished products with smooth surfaces.

It is a further embodiment of the present invention to provide a method of compression molding thermoplastic parts which maintains short cycle times and therefore high throughput for each press.

It is another embodiment of this invention to provide a means for transporting plastic sheet blanks into the mold.

It is yet another object of the present invention to provide a method of compression molding which results in reduced thermal decomposition of the thermoplastic resins.

Summary of the Invention

In one aspect of the invention there is provided a method of compression molding using an insulating film on the part being molded, comprising the steps of placing a thermoplastic charge on a plastic insulating film having a thermal conductivity of $5 \times 10^{-3}$ to $1 \times 10^{-4}$ cal/cm sec C, a thickness in centimeters defined by the equation

$$\sqrt{\alpha} < thickness < 25 \sqrt{\alpha}$$

where is the thermal diffusivity of the film in CGS units, and a glass transition temperature or melting point higher than that of said charge; heating said charge to above its glass transition temperature if it is an amorphous material or above its melting point if it is a crystalline material, but below the glass transition temperature or melting point of said film; transporting the heated charge on the insulating film to between the cooled mold halves of a press; and closing the mold halves to flow form said charge, and to deform said film without flow forming it. The film acts as an insulating layer to reduce the cooling rate of the plastic charge when it is placed in the mold, so that the surface of the plastic charge remains hot while the plastic fills the mold in less than a second or two. However, the film is sufficiently conducting that the charge can be cooled over several tens of seconds.

Brief Description of the Drawing

The subject matter which is regarded as the invention is particularly pointed out and distinctly claimed in the concluding portion of the specification. The invention however, both as to organization and method of operation, together with further objects and advantages thereof, may best be understood by reference to the following description taken in conjunction with the accompanying drawing figures in which:

Figures 1A and 1B are isometric representations of the steps of compression molding plastic in accordance with the present invention; and

Figures 2A and 2B are isometric representations of another embodiment in accordance with the present invention.

Detailed Description of the Invention

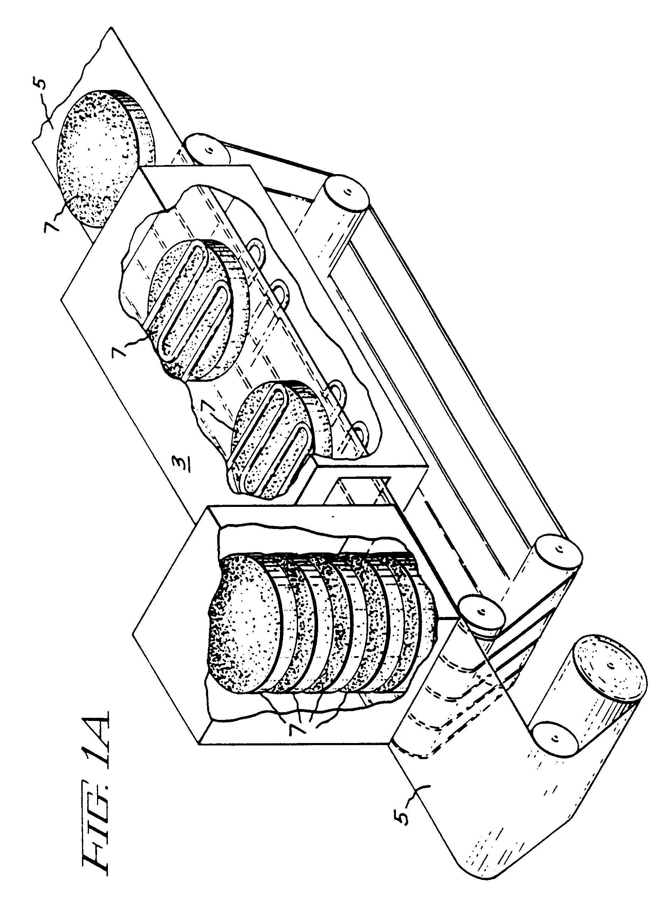

Referring now to the drawings wherein like numerals indicate like elements throughout and more particularly to Figures 1A and 1B thereof, a travelling oven 3 is shown. A deformable insulation film 5 carries a charge of plastic material 7 to be molded through the oven. The plastic charge can comprise a neat thermoplastic or a fiber reinforcing material in a thermoplastic matrix. The film 5 comprises a plastic having a high melting point with low heat conductivity such as polytetrofluoroethylene or thermoplastic polyimides such as Ultem® polyetherimide available from GE, other high temperature thermoplastics including Kapton polyimide from Dupont, Skybond polyimide from Monsanto, Torlon polyimide from Amoco and PPQ 401 from Whittaker. High temperature thermoset polymers which can alternatively be used as film materials, include for example, polyimides, epoxies, and diallyisophthalate. The film can alternatively comprise a high temperature elastomer such as silicon rubber or Viton® fluoroelastic available from Dupont. The high melting point assures the integrity of the film during the heating and subsequent flow forming stage.

Plastic charges 7, although shown in the shape of a disk in Figure 1A and 1B can have any shape suitable for the subsequent molding step, are transported through the traveling oven 3 on film 5, with the film and charge being heated at the same time. The charge is heated sufficiently so that the center of the charge material is substantially above the glass transition temperature if it is an amorphous thermoplastic or above the melting point if it is a crystalline thermoplastic, while the film is not heated above its glass transition or above its melting point. The film transports the charge from the oven to between the mold halves 11a and 11b in press 13. The mold halves are cooled such as by a cooling liquid flowing in passageways in the mold halves (not shown). The film selected depends on the glass transition temperature or melting point of the thermoplastic charge and ability of the film to deform against the mold surface. The film material needs to retain its strength so that it does not tear when pulled through the oven 3 and then through the press 13.

During molding the film deforms to the shape of the face of the lower mold half 11b, but the film is not molten and does not flow. The film provides sufficient insulation so that the plastic charge does not immediately assume the temperature of the cool mold during the early stages of flow forming. Rather, the insulating property of the film keeps the charge hot so that it remains molten and flows into all parts of the mold. However, the insulating value of the film is not so high that heat cannot be extracted during later stages of the molding cycle. The time-average rate of cooling during the overall cycle can be kept the same as it would be without the film by reducing the mold temperature from the values that would have been used in situations where the film was not present. If insulating films were not used a cooler mold could not be used because the plastic charge would be cooled too rapidly and could not be properly flow formed to fill the mold. The instantaneous cooling rates with the insulating film are lower initially and similar or higher during the end of the cooling period than they would be without the film and the mold at a higher temperature.

When the press 13 closes the mold halves 11a and 11b cut the film material 5. The press opens and the molded part and film are removed together. The film can then be removed easily from the molded part 15 when the plastic charge material does not adhere to the film. When a 0.4 mm (1/64") silicon rubber sheet serving as the film with an 3.2 mm (1/8") sheet of Xenoy® on top serving as the plastic charge was heated in a 316°C (600°F) oven until the center of the Xenoy sheet reached 288°C (550°F) and then compression molded, the silicon rubber was easily removed from the Xenoy after molding. Similarly when a 0.4 mm (1/64") polytetrafluorethane film was used with an 3.2 mm (1/8") Xenoy sheet, the PTFE film was also easily removed.

While only a single sheet of film is shown in Figures 1A and 1B, a second sheet can be used on top of the plastic charge during the transport of the charge to the press and subsequent molding. Alternatively, a second sheet can be used on top of the plastic charge during heating, transporting and molding. The second sheet would help to further reduce thermal decomposition of the plastic charge resin by reducing the exposure to air of the hot resin. The second film also reduces cooling of the resin during transport from the sheet blank heater to the press. The reduced cooling of the charge would allow a lower preheat temperature, or less heating time, or both. Two films, one on top and one below would also further reduce the required molding pressure by keeping the plastic charge surfaces at an elevated temperature longer during the press closing. The two films could comprise different materials one or both of which could be selected to bond to the plastic charge during molding or they both could be removable.

The foregoing has addressed insulating films that are utilized both for transport and for molding. It might be beneficial to use one set of films for transporting blanks to the mold and yet another set of films for transporting the blanks actually into the mold press and subsequently being deformed with the part during molding. The transfer of the blank from the transport films to the forming films would be accomplished just outside the press.

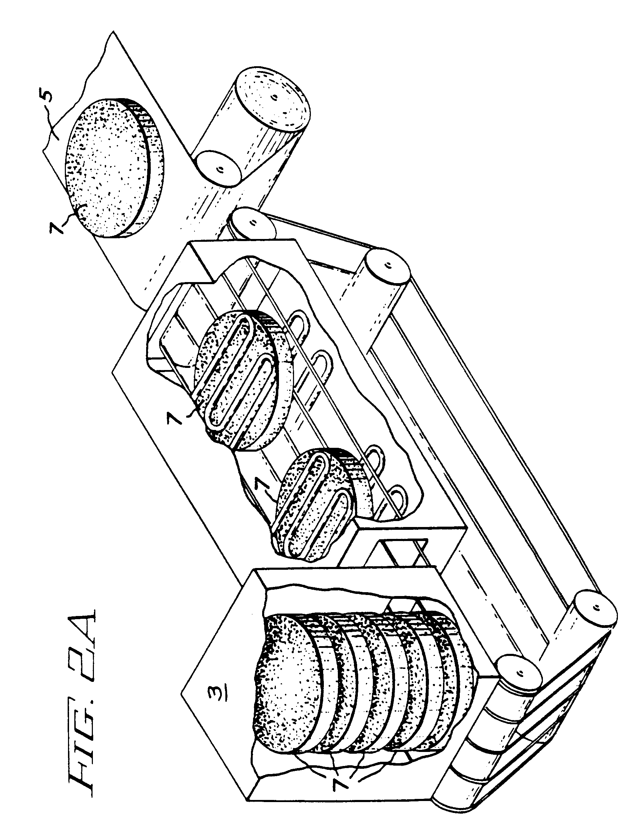

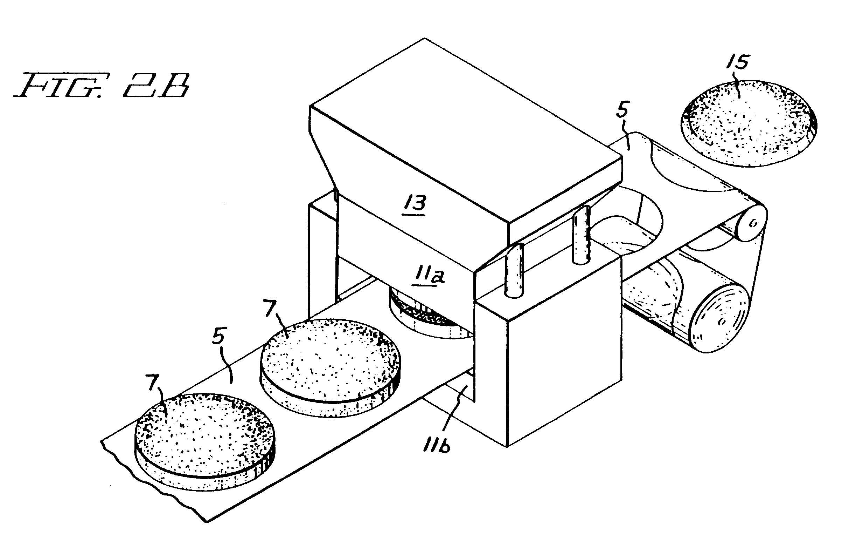

Referring now to Figures 2A and 2B, another embodiment of the present invention is shown. The plastic charges 7 are shown being heated in the travelling oven 3 and then being transported on an insulating film 5 to and between the mold halves 11a and 11b of the press 13. Some insulating films cannot withstand the oven temperatures which are needed to properly heat certain plastic charges, but can withstand the heat of the charge when it emerges from the oven. The insulating film transports the heated charge to the press where the film is deformed by the lower mold half 11b. Some combination of insulating films and plastic charges bond well together and laminate products can be formed. For example, if a charge of Xenoy plastic is heated in an oven to 316°C (600°F) and then transported on a 0.4 mm (1/64") film of Ultem® to the press and molded, the Xenoy would bond to the Ultem forming a laminate.

While only a single insulating film is shown in Figures 2A and 2B, two films can be used; one above and one below the heated charge when it emerges from the oven. The two films can comprise two different films with one bonding to the plastic charge during molding and one not. Alternatively, both films could either both bond or not bond.

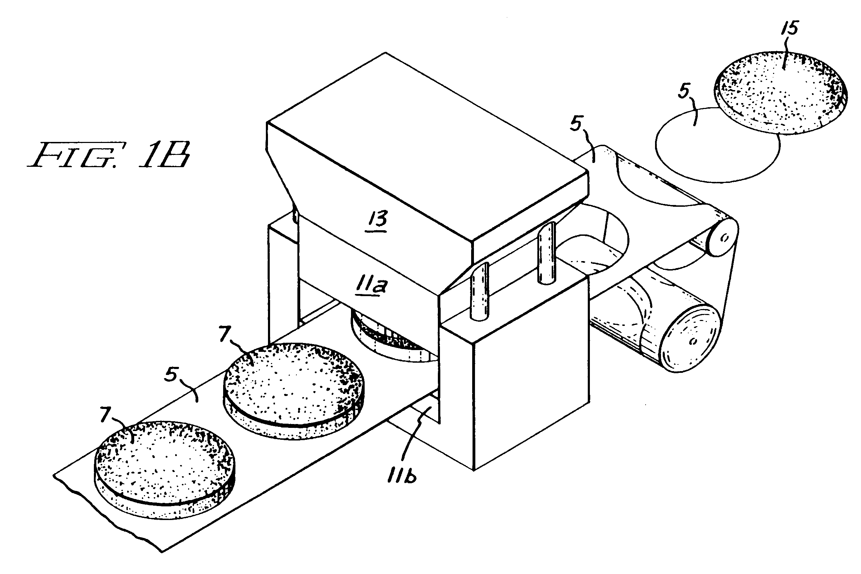

In those situations where the plastic or elastomeric films in the embodiments of Fig. 1 and Fig. 2 are not sufficiently insulating at the desired film thickness, composite films can be employed using plastic or elastomeric films surrounding more conventional insulating materials such as fiber mats.

The desired thermal conductivity of the insulating film should be in the range of $5X10^{-3}$ to $1X10^{-4}$ cal./$cm.^2$sec. C/cm. where C stands for degrees centigrade. The thickness in centimeters (cm) of the insulating film can be determined from the thermal diffusivity, $\alpha$, of the film material according to equation 1.

$$\sqrt{\alpha} \, ^< \text{ thickness } ^< 25\sqrt{\alpha} \qquad (1)$$

Thermal diffusivity is defined by equation 2,

$$\alpha = \frac{k}{c\rho} \qquad (2)$$

where k is the thermal conductivity of the film, c is the specific heat and $\rho$ is the density, with all the elements in CGS units.

The lower thickness limit in equation 1, is imposed by the desire to minimize sheet cooling over the approximately 1 second time it takes to flow form the part. The upper thickness limit prescribes an addition of no more than two minutes to the entire cooling cycle. In fact, it may be possible to maintain the same cooling times as are accomplished without the use of these films when the mold temperatures are controlled at lower values.

The foregoing has described a method of compression molding which results in finished products with smooth surfaces and short cycle times. The method reduces the required mold pressure and reduces the thermal decomposition of the thermoplastic resins in the plastic charge being molded.

**Claims**

1. A method of compression molding using an insulating film on the part being molded, comprising the steps of :

placing a thermoplastic charge on a plastic insulating film having a thermal conductivity of $5 \times 10^{-3}$ to $1 \times 10^{-4}$ cal/cm sec C, a thickness in centimeters defined by the equation

$\sqrt{\alpha}$ < thickness < 25$\sqrt{\alpha}$,

where $\alpha$ is the thermal diffusivity of the film in CGS units, and a glass transition temperature or melting point higher than that of said charge;

heating said charge to above its glass transition temperature if it is an amorphous material or above its melting point if it is a crystalline material, but below the glass transition temperature or melting point of said film;

transporting the heated charge on the insulating film to between the cooled mold halves of a press; and

closing the mold halves to flow form said charge, and to deform said film without flow forming it.

2. The method of claim 1 further comprising the steps of:
removing the film and molded part from the mold; and
separating the film from the part.

3. The method of claim 1 further comprising the step of removing the film and molded part from the mold with the film laminated to the part.

4. The method of claim 1 wherein said step of heating includes heating the thermoplastic charge on a film in an oven.

5. The method of claim 1 wherein said step of transporting the heated charge occurs between two insulating films.

**Patentansprüche**

1. Verfahren zum Formpressen unter Verwendung einer isolierenden Folie auf dem auszuformenden Teil, umfassend die folgenden Verfahrensstufen:
Anordnung einer thermoplastischen Charge auf einer verformbaren isolierenden Folie mit einer thermischen Leitfähigkeit von 5 x 10$^{-3}$ bis 1 x 10$^{-4}$ cal/cm sec C, einer Dicke in Zentimetern, die durch die Gleichung

$$\sqrt{\alpha} < \text{Dicke} < 25\ \sqrt{\alpha}$$

definiert ist, worin $\alpha$ die thermische Durchlässigkeit des Films in CGS Einheiten darstellt, und einer Glasübergangstemperatur oder einem Schmelzpunkt, der höher ist als der der Charge;
Erhitzen der Charge über ihre Glasübergangstemperatur, wenn es sich um ein amorphes Material handelt oder über ihren Schmelzpunkt, wenn es ein kristallines Material ist, jedoch unterhalb der Glasübergangstemperatur oder des Schmelzpunktes der besagten Folie; Transportieren der erhitzten Charge auf der isolierenden Folie zwischen die gekühlten Formhälften einer Presse und
Schließen der Formhälften zum Fließformen der Charge und Entformen der Folie, ohne daß dieselbe fließverformt wird.

2. Verfahren nach Anspruch 1, welches weiterhin die folgenden Stufen umfaßt:
Entfernung der Folie und des ausgeformten Teils aus der Form; und
Abtrennung der Folie von dem Teil.

3. Verfahren nach Anspruch 1, welches weiterhin die Stufe der Entfernung der Folie und des ausgeformten Teils aus der Form umfaßt, wobei die Folie an das Teil laminiert ist.

4. Verfahren nach Anspruch 1, worin die Erhitzungsstufe das Erhitzen der thermoplastischen Charge auf einem Film in einem Ofen umfaßt.

5. Verfahren nach Anspruch 1, worin die Stufe des Transportierens der erhitzten Charge zwischen zwei isolierenden Folien erfolgt.

**Revendications**

1. Procédé de moulage par compression mettant en oeuvre un film isolant sur la pièce à mouler, qui comporte les étapes consistant à:
   - placer une charge thermoplastique sur un film isolant en matière plastique, ayant une conductivité thermique de $5.10^{-3}$ à $1.10^{-4}$ cal/cm.s.C, une épaisseur en cm définie par l'équation

   $$\sqrt{\alpha} < \text{épaisseur} < 25\sqrt{\alpha},$$

   dans laquelle $\alpha$ représente la diffusivité thermique du film en unités CGS, et une température de transition vitreuse ou un point de fusion supérieur(e) à celui (celle) de ladite charge,
   - chauffer ladite charge à une température supérieure à sa température de transition vitreuse s'il s'agit d'un matériau amorphe, ou supérieure à son point de fusion s'il s'agit d'un matériau cristallin, mais inférieure à la température de transition vitreuse ou au point de fusion dudit film,
   - transporter la charge chauffée, déposée sur le film isolant, entre les demi-moules refroidis d'une presse, et
   - fermer les demi-moules pour mouler en coulée ladite charge, et déformer ledit film sans le mouler en coulée.

2. Procédé de la revendication 1, comprenant en outre les étapes consistant à:
   - retirer du moule le film ainsi que la pièce moulée, et
   - séparer le film d'avec la pièce.

3. Procédé de la revendication 1, comprenant en outre l'étape consistant à retirer du moule le film ainsi que la pièce moulée, le film étant stratifié sur la pièce.

4. Procédé de la revendication 1, dans laquelle ledit chauffage consiste à chauffer dans un four la charge thermoplastique déposée sur un film.

5. Procédé de la revendication 1, dans laquelle ledit transport de la charge chauffée est réalisé entre deux films isolants.

FIG. 1A

FIG. 1B

FIG. 2A

EP 0 335 097 B1

FIG. 2B